# EUROPEAN PATENT APPLICATION

(11) **EP 2 549 172 A1**
(43) Date of publication of application: **23.01.2013**
(21) Application number: 10848004.7
(22) Date of filing: 22.12.2010
(51) Int. Cl.: F21S 2/00, H05B 37/02, F21Y 101/02

(54) **EDGE-LIGHT TYPE PLANAR LIGHT-SOURCE APPARATUS AND LIQUID CRYSTAL DISPLAY APPARATUS**

(30) Priority: 16.03.2010 JP 2010059203
(71) Applicant: Sharp Kabushiki Kaisha, Osaka-shi, Osaka 545-8522 (JP)
(72) Inventor: SUGIURA, Yasutaka, osaka 545-8522 (JP)
(74) Representative: Müller-Boré & Partner Patentanwälte
(86) International application number: PCT/JP2010/073173
(87) International publication number: WO 2011/114598

(57) **Abstract**

Provided is an edge light type planar light source device capable of preventing luminance unevenness. An edge light type planar light source device includes a light guide plate (7) emitting light entering from its end face (74) from its front face (71), a linear light source unit (11) including an LED substrate (112) and LED elements (111) connected to each other in series, aligned on the substrate and opposed to the end face, a floor face (91) where the plate is disposed, and a locking member (10) erecting on the floor face at a peripheral portion of the plate and inserted in the peripheral portion from a back face toward a front face, wherein the elements disposed apart from the member each include resistance elements (117) parallel-connected to the elements to make the elements disposed in the vicinity of the member higher in luminance than the other elements.

## Description

### Technical Field

The present invention relates to an edge light type planar light source device, and a liquid crystal display device including the light source device.

### Background Art

A transmissive or transflective liquid crystal display device includes a liquid crystal display panel and a planar light source device (a so-called backlight) disposed behind the liquid crystal display panel. In this type of liquid crystal display device, planar light projected from the planar light source device is used to display an image on a display screen of the liquid crystal display panel.

An edge (side) light type planar light source device is known as the planar light source device, which has a configuration such that a linear light source, which defines a member consisting of a substrate and a plurality of LED (Light Emitting Diode) chips that are aligned on the substrate, or a cold cathode fluorescent tube, is disposed along an end face of a light guide plate that defines a clear plate made from an acrylate resin. In this type of planar light source device, the light emitted from the linear light source is guided to the inside of the light guide plate from the end face of the light guide plate, and thereby the guided light is made into planar light and emitted from a front face of the light guide plate. The light guide plate includes scattering members in a dot pattern that are disposed over a back face of the light guide plate and arranged to scatter the light that enters from the end face of the light guide plate. In addition, a reflection sheet arranged to reflect the light is provided on the back face of the light guide plate. Thus, the light emitted from the linear light source as described above is scattered or reflected by the scattering members or the reflection sheet, and thereby the light is made into planar light and emitted from the front face of the light guide plate.

PTL 1 discloses this type of planar light source device, which includes a light guide plate on a peripheral portion of which, a notch or through hole for disposing or fixing the light guide plate to a chassis is provided. The notch or through hole is disposed inside of a peripheral end face of the light guide plate having a rectangular shape. The light guide plate is disposed or fixed to the chassis with the use of a projecting locking member such as a pin that erects from the chassis and is inserted in the notch or through hole.

Having this configuration, the light guide plate does not need a convex portion to be disposed outside of the peripheral portion as shown in PTL 2 for the purpose of disposition of the light guide plate. Thus, every end face of the light guide plate has an almost straight (almost flat) shape. The planar light source device including the light guide plate described above is capable of having the linear light source disposed along any end face of the light guide plate. In addition, the planar light source device including the light guide plate described above is preferably used together with a liquid crystal display panel having a narrow nondisplay region that surrounds a display region (i.e., a liquid crystal display panel having a narrow frame region).

### Citation List

### Patent Literature

PTL 1: JP H06-186432
PTL 2: JP2005-302485

### Summary of Invention

### Technical problem

However, a problem arises in PTL 1 that when the locking member such as a pin is inserted in the portion inside of the peripheral end face of the light guide plate, the locking member blocks the light projected from the linear light source to make luminance unevenness develop in the planar light source device.

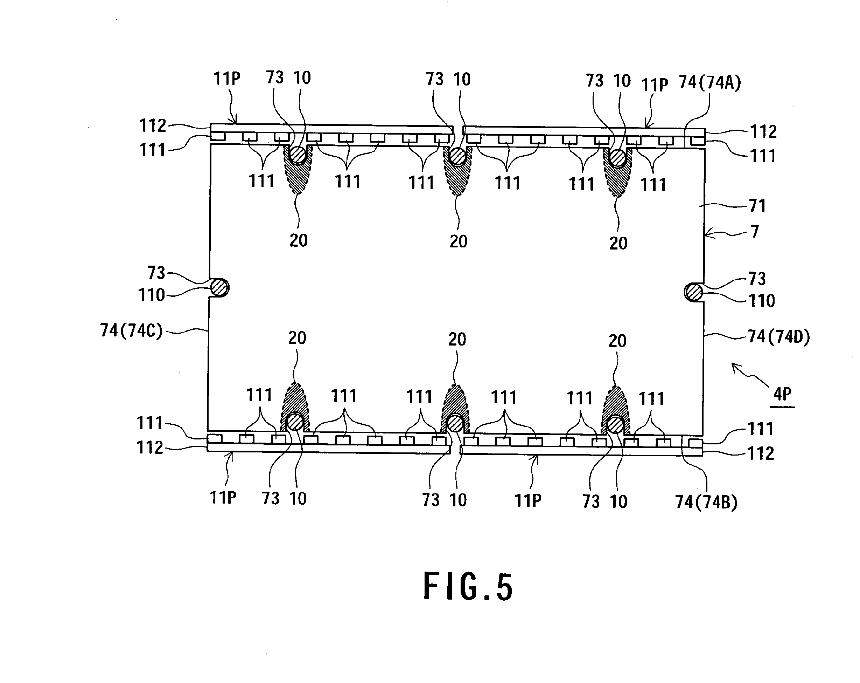

A description of the luminance unevenness that develops in the planar light source device will be provided with reference to Fig. 5. Fig. 5 is a plan view showing a schematic configuration of a conventional edge light type planar light source device 4P. The conventional edge light type planar light source device 4P includes a light guide plate 7 having a rectangular shape. The light guide plate 7 includes a plurality of notches 73 that are disposed on peripheral portions on longer sides of the light guide plate 7. A plurality of locking pins (locking members) 10 are inserted in the notches 73. Linear light source units 11P are disposed on two end faces 74 (74A and 74B) on the longer sides of the light guide plate 7. Each linear light source unit 11P has a configuration of including an LED substrate, and a plurality of LED elements 111 that are aligned on the LED substrate. Each LED element 111 includes a light emitting surface 113 arrange to emit light therefrom, and the light emitting surfaces 113 are opposed to the end faces 74 of the light guide plate 7.

In the conventional edge light type planar light source device 4P shown in Fig. 5, when the light is projected onto the light guide plate 7 from the linear light source units 11P, the light projected onto the end faces 74 of the light guide plate 7 is blocked by the locking pins 10 disposed in front of the light, and thereby portions 20 are provided in the rear of (behind) the locking pins 10, the portions 20 being lower in luminance than the other portions (i.e., the portions 20 def ine shadows) . In this case, the light emitted from a front face 71 of the light guide plate 7 decreases at the portions 20 compared with the other portions, and the portions 20 become darker. Thus, the planar light emitted from the planar light source device 4P is, as a whole, nonuniform in intensity. That is, luminance unevenness develops in the light emitted from the planar light source device 4P. When the light emitted from the planar light source device 4P is nonuniform as described above, display unevenness (luminance unevenness) develops in a liquid crystal display panel, which is a problem.

PTL 1 discloses a technique of adjusting the size and the disposition of scattering members disposed on a back face of the light guide plate, and gathering the scattered light at the rear of the locking member in order to make the light emitted from the planar light source device uniform. However, it is difficult to make the rear of the locking member bright enough to remove the display unevenness (luminance unevenness) developing in the liquid crystal display panel only by adjusting the size and the disposition of the scattering members, which is a problem.

An object of the present invention is to provide an edge light type planar light source device that is capable of preventing luminance unevenness from developing in a display panel, which is caused by nonuniform light projected onto the display panel when planar light is projected from a front face of a light guide plate, and to provide a liquid crystal display device including the planar light source device.

### Solution to Problem

An edge light type planar light source device of the present invent includes;
<1> a floor face, a light guide plate disposed on the floor face, a linear light source unit that includes an LED substrate and a plurality of LED elements that are connected to each other in series, aligned on the LED substrate, and opposed to an end face of the light guide plate, and a locking member that erects on the floor face at a peripheral portion of the light guide plate, and is inserted in the peripheral portion of the light guide plate from a back face of the peripheral portion toward a front face of the peripheral portion, wherein some of the LED elements are disposed in a vicinity of the locking member while the other LED elements are disposed apart from the locking member, and the LED elements disposed apart from the locking member each include resistance elements that are parallel-connected to the LED elements disposed apart from the locking member in a manner that the light emitted toward the light guide plate from the LED elements disposed in the vicinity of the locking member is higher in luminance than the light emitted toward the light guide plate from the LED elements disposed apart from the locking member.

<2> The edge light type planar light source device according to <1> preferably has a configuration such that the resistance elements are each parallel-connected to the LED elements other than the LED elements disposed in the vicinity of the locking member.

<3> The edge light type planar light source device according to <1> preferably has a configuration such that the resistance elements include a resistance element that is parallel-connected to some adjacent LED elements among the LED elements other than the LED elements disposed in the vicinity of the locking member.

<4> The edge light type planar light source device according to any one of <1> to <3> preferably has a configuration such that the LED elements disposed in the vicinity of the locking member each include resistance elements used for an LED element disposed in a vicinity of a locking member, the resistance elements having resistance values larger than the resistance elements that are parallel-connected to the LED elements disposed apart from the locking member.

<5> A liquid crystal display device of the present invention includes a transmissive or transflective liquid crystal display panel, and the edge light type planar light source device according to according to any one of <1> to <4>, which is disposed on a back face of the liquid crystal display panel.

### Advantageous Effects of Invention

Because the edge light type planar light source device of the present invention has the configuration that the light, which is emitted from the LED elements disposed on the LED substrate of the linear light source unit and enters the light guide plate, where the light is made into planar light, is projected from the front face of the light guide plate onto the display panel, where the light emitted from the LED elements disposed in the vicinity of the locking member erecting on the floor face is made substantively higher in luminance than the light emitted from the LED elements disposed apart from the locking member by parallel-connecting the resistance elements to the LED elements disposed apart from the locking member, the light projected from the light guide plate onto the display panel can be made uniform, which can prevent luminance unevenness from developing in the display panel.

### Brief Description of Drawings

Fig. 1 is an explanatory view schematically showing a liquid crystal display device in cross section of a preferred embodiment of the present invention.
Fig. 2 is a plan view showing a schematic configuration of an edge light type planar light source device.
Fig. 3 is an explanatory view schematically showing circuits of LED elements disposed on a linear light source unit.
Fig. 4 is an explanatory view schematically showing a modified embodiment of the circuits of the LED elements disposed on the linear light source unit.
Fig. 5 is a plan view showing a schematic configuration of a conventional edge light type planar light source device.

### Description of Embodiments

Detailed descriptions of an edge light type planar light source device and a liquid crystal display device of preferred embodiments of the present invention will now be provided with reference to the accompanying drawings. It is to be noted that the present invention is not limited to the preferred embodiments described in the present specification.

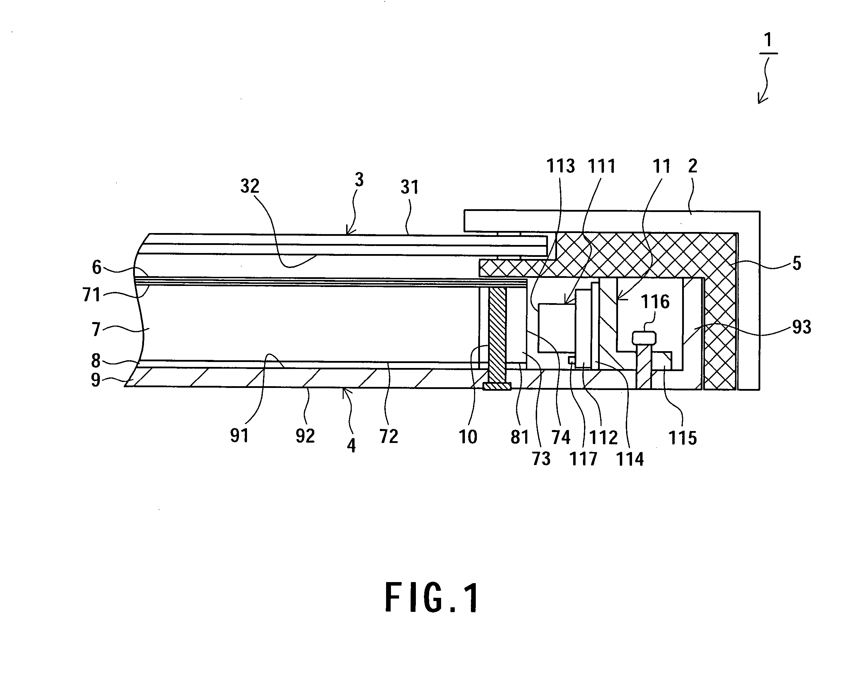

Fig. 1 is an explanatory view schematically showing a liquid crystal display device 1 in cross section of a preferred embodiment of the present invention. The liquid crystal display device 1 includes a bezel 2, a liquid crystal display panel 3, and an edge light type planar light source device 4.

The bezel 2 has a frame shape so as to be covered on a peripheral portion of the liquid crystal display panel 3. The bezel 2 is, together with a chassis 9 to be described later, arranged to ensure strength of the entire liquid crystal display device 1.

The liquid crystal display panel 3 consists of two glass substrates that are bonded together while sandwiching liquid crystals therebetween. The liquid crystal display panel 3 is disposed above the edge light type planar light source device 4, receives light projected from the light source device 4 with its back face 32 and displays an image on its front face 31 using the light. The liquid crystal display panel 3 is electrically connected to a control circuit board (not shown) the light source device 4 includes.

The edge light type planar light source device 4 includes a frame 5, optical sheets 6, a light guide plate 7, a reflection sheet 8, a chassis 9, locking pins (locking members) 10, and linear light source units 11.

The chassis 9 is preferably a metal plate made from aluminum, and takes the shape of a container of low height by bending the metal plate. The chassis 9 includes a bottom 92 on a front face (floor face) 91 of which the light guide plate 7 is disposed, and a side wall 93 that erects on the bottom 92 so as to surround the bottom 92.

The reflection sheet 8 having a rectangular shape is disposed on the floor face 91 of the chassis 9. The reflection sheet 8 defines a white expanded resin sheet (e.g., an expanded polyethylene terephthalate sheet). The reflection sheet 8 includes a plurality of notches 81 disposed on a peripheral portion of the reflection sheet 8. The light guide plate 7 is disposed on the reflection sheet 8. The positions of the notches 81 of the reflection sheet 8 are determined so as to correspond to the positions of notches 73 to be described later of the light guide plate 7.

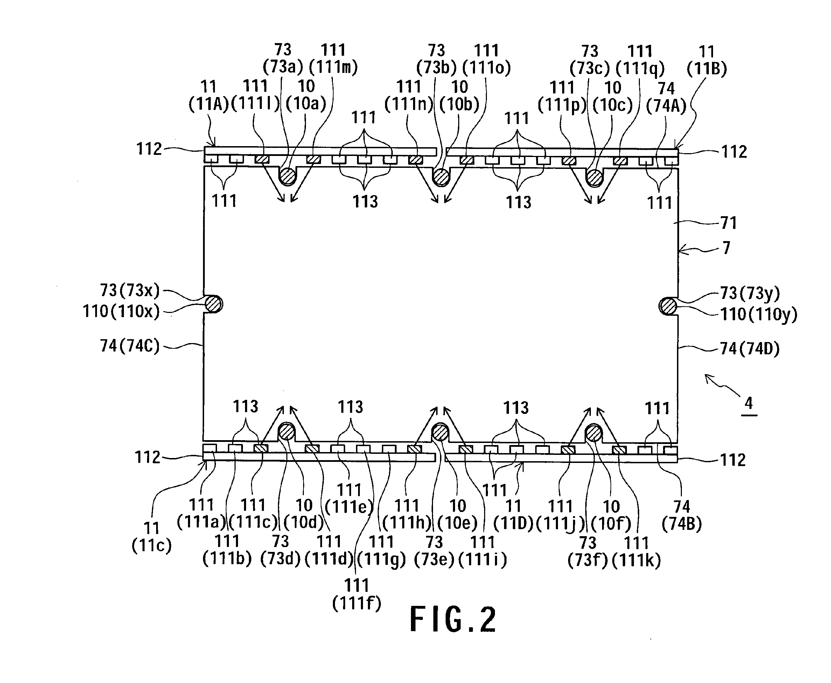

The light guide plate 7 defines a plate member made from a clear material such as an acrylic resin, which is about 3 to 4 mm in thickness. Fig. 2 is a plan view showing a schematic configuration of the edge light type planar light source device 4. Shown in Fig. 2 is the edge light type planar light source device 4 when seen in a plan view from the side of the front face 71 of the light guide plate 7. The optical sheets 6 are disposed on the front face 71 of the light guide plate 7 actually, which are not shown in Fig. 2 for the sake of illustration.

The light guide plate 7 has a rectangular shape, and includes the plurality of notches 73 disposed on a peripheral portion of the light guide plate 7 as shown in Fig. 2. The three notches 73a, 73b and 73c among the notches 73 are disposed on a peripheral portion of the light guide plate 7 that is inside of an end face 74 (74A) on one of longer sides of the light guide plate 7. In addition, other three notches 73d, 73e and 73f are disposed on a peripheral portion of the light guide plate 7 that is inside of an end face 74 (74B) on the other longer side of the light guide plate 7. A notch 73x is disposed on a peripheral portion of the light guide plate 7 that is inside of an end face 74 (74C) on one of shorter sides of the light guide plate 7. In addition, a notch 73y is disposed on a peripheral portion of the light guide plate 7 that is inside of an end face 74 (74D) on the other shorter side of the light guide plate 7. Each notch 73 has the shape of the letter "U" that is recessed from each end face 74 of the light guide plate 7 as shown in Fig. 2.

The light guide plate 7 includes a plurality of scattering members in a dot pattern (not shown) that are disposed on a back face 72 of the light guide plate 7. The scattering members are preferably provided thereon by dotting paint containing a white pigment on the back face 72 of the light guide plate 7 in a silkscreening printing method, or are preferably provided thereon by forming a plurality of concave portions (i.e., frosting) on the back face 72 of the light guide plate 7, which are formed by shaving the back face 72.

The locking pins 10 that have a column shape are each inserted in the notches 73 of the light guide plate 7. The locking pins 10 erect on the floor face (bottom) 91 of the chassis 9 as shown in Fig. 1, and are inserted in the notches 73 from the back face 72 toward the front face 71 of the light guide plate 7. The locking pins 10 are inserted also in the notches 81 of the reflection sheet 8 in addition to the notches 73 of the light guide plate 7 as shown in Fig. 1. Because the locking pins 10 are inserted in the notches 73, the light guide plate 7 can be disposed on the floor face 91 of the chassis 9. The locking pins 10 of the present embodiment are made from the same material as chassis 9. The bezel 2 having the frame shape and other constituent elements are disposed above the locking pins 10 as shown in Fig. 1. To be specific, the locking pins 10 are disposed in a nondisplay region of the liquid crystal display device 1 (the liquid crystal display panel 3).

The optical sheets 6 are stacked on the front face 71 of the light guide plate 7 as shown in Fig. 1. The optical sheets 6 have a rectangular shape so as to cover the front face 71 of the light guide plate 7. The optical sheets 6 of the present embodiment consist of three layers of a polarization selective reflection layer, a lens layer and a diffusion layer. The diffusion layer is arranged to diffuse light emitted from the front face 71 of the light guide plate 7, and allows uniformalization of brightness distribution of the light. The lens layer is arranged to gather light that emits from the diffusion layer, and allows enhancement of front brightness of the light. The polarization selective reflection layer is arranged to selectively reflect the light that passes through the lens layer so that the light is not absorbed by a polarizing plate (not shown) that is attached on the back side of the liquid crystal display panel 3.

The reflection sheet 8, the light guide plate 7, and the optical sheets 6 are stacked in this order on the floor face 91 of the chassis 9 as shown in Fig. 1. The frame 5 having a frame shape is covered on the chassis 9 in order to fix the stack to the chassis 9.

The linear light source units 11 (11A, 11B, 11C and 11D) are disposed such that the light is projected onto the end faces 74 of the light guide plate 7 as shown in Figs. 1 and 2. Each linear light source unit 11 has a configuration of including an LED substrate 112 having a long shape, and a plurality of LED elements 111 that are disposed on the LED substrate 112. The LED elements 111 are aligned on each LED substrate 112. Each of the LED elements 111 has a package structure such that an LED chip that emits blue light is encapsulated in a transparent resin into which a yellow fluorescent material is mixed, for example, and is capable of emitting white light from its front face (light emitting surface) 113. The light emitted from the light emitting surfaces 113 of the LED elements 111 enters the inside of the light guide plate 7 from the end faces 74.

Each LED substrate 112 includes a radiating plate preferably made from aluminum (not shown), and an insulating layer (not shown) that covers the radiating plate. The LED elements 111 disposed on each LED substrate 112 are connected to one another in series by wiring patterns (not shown). The wiring patterns are provided on each insulating layer. A light-source-side substrate connector (not shown) is disposed at one end of each LED substrate 112, and a ground-side substrate connector (not shown) is disposed at the other end of each LED substrate 112. The light-source-side substrate connector and the ground-side substrate connector are arranged to supply power to the LED elements 111. The light-source-side substrate connector includes a light-source-side terminal (positive terminal), and the ground-side substrate connector includes a ground-side terminal (negative terminal). The light-source-side substrate connector and the ground-side substrate connector are connected to a power board (not shown) of the edge light type planar light source device 4 via cables (not shown).

A thermal conductive sheet 114 is attached to each LED substrate 112 on a side where the LED elements 111 are not disposed as shown in Fig. 1. Fixing members 115 are provided such that the thermal conductive sheets 114 are sandwiched between the fixing members 115 and the LED substrates 112. The fixing members 115 are metal plates that take the shape of the letter "L" in cross section by bending the metal plates. The LED substrates 112 are fixed to some portions of the fixing members 115, where the fixing members 115 erect with the portions on the floor face 91 of the chassis 9, while sandwiching the thermal conductive sheets 114. The portions of the fixing members 115 with which the fixing members 115 erect on the floor face 91 are fixed to the chassis 9 with the use of screws 116.

The two linear light source units 11A and 11B are disposed side by side along the end face 74A on one of longer sides of the light guide plate 7 having a rectangular shape as shown in Fig. 2. A clearance, which is set considering thermal expansion of the light guide plate 7, is provided between the light emitting surfaces 113 of the LED elements 111 disposed on the linear light source units 11A and 11B and the end face 74A of the light guide plate 7. In addition, the two linear light source units 11C and 11D are disposed side by side along the end face 74B on the other longer side of the light guide plate 7. A clearance, which is set considering thermal expansion of the light guide plate 7, is provided between the light emitting surfaces 113 of the LED elements 111 disposed on the linear light source units 11C and 11D and the end face 74B of the light guide plate 7.

The three locking pins 10a, 10b and 10c are disposed on the peripheral portion of the light guide plate 7 that is inside of the end face 74A on the one of the longer sides of the light guide plate 7. In addition, the three locking pins 10d, 10e and 10f are disposed on the peripheral portion of the light guide plate 7 that is inside of the end face 74B on the other longer side of the light guide plate 7. The linear light source units 11A to 11D are disposed in front of the locking pins 10a to 10f.

Some of the LED elements 111 of the linear light source units 11 are disposed in the vicinity of the locking pins 10, and they are set to be higher in luminance than the other LED elements 111 in the edge light type planar light source device 4 of the present embodiment. To be specific, the LED elements 1111 and 111m disposed in the vicinity of the locking pin 10a, the LED elements 111n and 111o disposed in the vicinity of the locking pin 10b, the LED elements 111p and 111q disposed in the vicinity of the locking pin 10c, the LED elements 111c and 111d disposed in the vicinity of the locking pin 10d, the LED elements 111h and 111i disposed in the vicinity of the locking pin 10e, and the LED elements 111j and 111k disposed in the vicinity of the locking pin 10f are set to be higher in luminance than the other LED elements 111.

A description of a manner of making the LED elements disposed in the vicinity of the locking pins 10 higher in luminance than the other LED elements will be provided, taking the linear light source unit 11c shown in Fig. 2 as an example. The linear light source unit 11c includes the eight LED elements 111a, 111b, 111c, 111d, 111e, 111f, 111g and 111h disposed on the LED substrate 112. Among these LED elements 111, the LED elements 111c and 111d are disposed in the vicinity of the locking pin 10d and the LED element 111h is disposed in the vicinity of the locking pin 10e. Thus, the LED elements 111c, 111d and 111h are set to be higher in luminance than the other LED elements 111a, 111b, 111e, 111f and 111g.

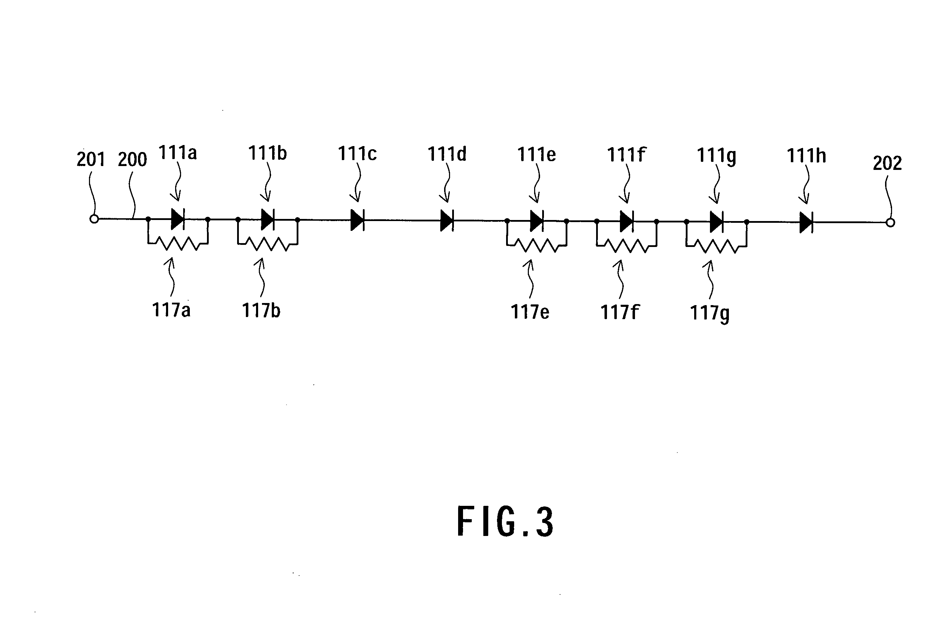

Fig. 3 is an explanatory view schematically showing circuits of the LED elements 111 disposed on the linear light source unit 11c. The eight LED elements 111a to 111h are connected to one another in series by a wiring pattern 200 as shown in Fig. 3. These LED elements 111 are constant-current-controlled by the above-described power board. These LED elements 111 are assumed to emit light equal in luminance when currents of a same amount are supplied thereto, for the sake of illustration. A light-source-side terminal (positive terminal) 201 is disposed at one end of the wiring pattern 200, and a ground-side terminal (negative terminal) 202 is disposed at the other end.

The LED elements 111a, 111b, 111e, 111f and 111g that are not disposed in the vicinity of the locking pin 10d (see Fig. 2) are parallel-connected to resistance elements 117 as shown in Fig. 3. To be specific, the resistance element 117a is parallel-connected to the LED element 111a, the resistance element 117b is parallel - connected to the LED element 111b, the resistance element 117e is parallel-connected to the LED element 111e, the resistance element 117f is parallel-connected to the LED element 111f, and the resistance element 117g is parallel-connected to the LED element 111g. The resistance elements 117a, 117b, 117e, 117f and 117g have resistance values that are set such that the LED elements 111a, 111b, 111e, 111f and 111g become equal in luminance.

Parallel-connecting the LED elements 111a, 111b, 111e, 111f and 111g to the resistance elements 117a, 117b, 117e, 117f and 117g, respectively, makes the currents passing through these LED elements 111 smaller than the currents passing through the LED elements 111c, 111d and 111h disposed in the vicinity of the locking pin 10. That is, the currents passing through the LED elements 111c, 111d and 111h disposed in the vicinity of the locking pin 10 is larger than the currents passing through the LED element 111a, 111b, 111e, 111f and 111g. Thus, the LED elements 111c, 111d and 111h disposed in the vicinity of the locking pin 10 are set to be higher in luminance than the other LED elements 111a, 111b, 111e, 111f and 111g.

The resistance elements 117 are, together with the LED elements 11, disposed on the LED substrates 112 as shown in Fig. 1.

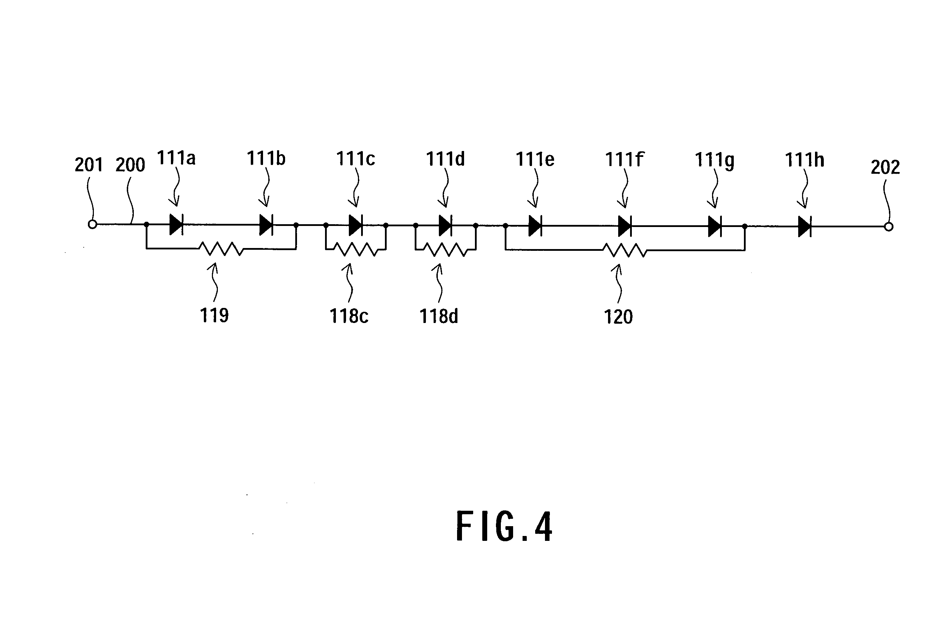

Fig. 4 is an explanatory view schematically showing a modified embodiment of the circuits of the LED elements 111 disposed on the linear light source unit 11c. The eight LED elements 111a to 111h are connected to one another in series by the wiring pattern 200 as shown in Fig. 4, and constant-current-controlled. The light-source-side terminal (positive terminal) 201 is disposed at one end of the wiring pattern 200, and the ground-side terminal (negative terminal) 202 is disposed at the other end. These LED elements 111 are assumed to emit light equal in luminance when currents of a same amount are supplied thereto, for the sake of illustration.

The LED element 111c disposed in the vicinity of the locking pin 10d is parallel-connected to a resistance element (resistance element used for an LED element disposed in the vicinity of a locking pin) 118c, and the LED element 111d disposed in the vicinity of the locking pin 10d is parallel-connected to a resistance element (resistance element used for an LED element disposed in the vicinity of a locking pin) 118d. The LED element 111h disposed in the vicinity of the locking pin 10e is not parallel-connected to a resistance element. Meanwhile, the LED elements 111a and 111b are parallel-connected to a resistance element 119, and the LED elements 111e, 111f and 111g are parallel-connected to a resistance element 120. That is, a plurality of LED elements are parallel-connected to one resistance element.

Resistance values of the resistance elements 118c and 118d are set to be larger than resistance values of the resistance elements 119 and 120. Among the LED elements 11 shown in Fig. 4, a largest amount of current passes through the LED element 111h, and a second largest amount of current passes through the LEDs elements 111c and 111d. As described above, it is preferable to parallel-connect the plurality of LED elements to one resistance element to adjust the amounts of currents passing through the LED elements, and thereby the luminance of each LED element is adjusted. It is also preferable to parallel-connect each LED element disposed in the vicinity of the locking pin 10 to one resistance element (a resistance element used for an LED element disposed in the vicinity of a locking pin) as necessary.

Similarly to the linear light source unit 11c, also in the other linear light source units 11a, 11b and 11d, the LED elements 111i, 111j, 111k, 1111, 111m, 111n, 111o, 111p and 111q disposed in the vicinity of the locking pins 10 can be set to be higher in luminance than the other LED elements.

Thus, the LED element 111c and other LED elements disposed in the vicinity of the locking pins 10 are made higher in luminance, whereby the light (the amounts of light) heading for the locking pins 10 is increased. The light that heads to the rear of the locking pins 10 from the LED element 111c and other LED elements is schematically shown in Fig. 2, where the light is indicated with the arrows. Thus, by making the LED element 111c and other LED elements higher in luminance, the rear of the locking pins 10 can be made as bright as the other portions.

The locking pin 110 (110x) is inserted in the notch 73 (73x) that is disposed on the peripheral portion of the light guide plate 7 that is inside of the end face 74C on the one of shorter sides of the light guide plate 7. The locking pin 110 (110y) is inserted in the notch 73 (73y) that is disposed on the peripheral portion of the light guide plate 7 that is inside of the end face 74D on the other shorter side of the light guide plate 7. There is no portion that is lower in luminance around the locking pins 110x and 110y.

As described above, because the peripheries (in particular, the rear) of the locking pins 10 can be made as bright as the other portions, the edge light type planar light source device 4 of the present embodiment is capable of emitting uniform planar light where luminance unevenness is prevented from developing. In addition, the liquid crystal display device 1 including the edge light type planar light source device 4 as described above includes a display panel where luminance unevenness (display unevenness) is prevented from developing.

In the present embodiment, the resistance elements are provided on the LED substrates to increase the amounts of currents passing through the given LED elements, whereby the given LED elements are made higher in luminance. Thus, only by adjusting the resistance values of the resistance elements, the luminance of the given LED elements can be easily adjusted. In addition, because it is unnecessary to change the shape of the LED elements in order to increase the luminance of the given LED elements, a conventional positional relation such as a distance between the light guide plate and the linear light source units could be used in the present invention.

Described above is the configuration that two LED elements 111 disposed in the vicinity of one locking pin 10 are set to be higher in luminance (brighter) than the other LED elements. It is also preferable to set one LED element 111 disposed in the vicinity of one locking pin 10 to be higher in luminance, or three or more LED elements 111 disposed in the vicinity of one locking pin 10 to be higher in luminance.

It is also preferable to use through holes that penetrate the periphery portion of the light guide plate 7 instead of the notches 73. Conventional through holes for disposition that are provided on a periphery portion of a light guide plate are used for the through holes.

It is also preferable to dispose the linear light source unit so as to be opposed to any end face 74 of the light guide plate 7.

## Claims

1. An edge light type planar light source device comprising:
a floor face;
a light guide plate disposed on the floor face;
a linear light source unit that comprises:
an LED substrate; and
a plurality of LED elements that are connected to each other in series, aligned on the LED substrate, and opposed to an end face of the light guide plate; and
a locking member that erects on the floor face at a peripheral portion of the light guide plate, and is inserted in the peripheral portion of the light guide plate from a back face of the peripheral portion toward a front face of the peripheral portion,
wherein some of the LED elements are disposed in a vicinity of the locking member while the other LED elements are disposed apart from the locking member, and the LED elements disposed apart from the locking member each comprise resistance elements that are parallel-connected to the LED elements disposed apart from the locking member in a manner that the light emitted toward the light guide plate from the LED elements disposed in the vicinity of the locking member is higher in luminance than the light emitted toward the light guide plate from the LED elements disposed apart from the locking member.

2. The edge light type planar light source device according to claim 1,
wherein the resistance elements are each parallel-connected to the LED elements other than the LED elements disposed in the vicinity of the locking member.

3. The edge light type planar light source device according to claim 1,
wherein the resistance elements comprise a resistance element that is parallel-connected to some adjacent LED elements among the LED elements other than the LED elements disposed in the vicinity of the locking member.

4. The edge light type planar light source device according to any one of claims 1 to 3,
wherein the LED elements disposed in the vicinity of the locking member each comprise resistance elements used for an LED element disposed in a vicinity of a locking member, the resistance elements having resistance values larger than the resistance elements that are parallel-connected to the LED elements disposed apart from the locking member.

5. A liquid crystal display device comprising:
a transmissive or transflective liquid crystal display panel; and
the edge light type planar light source device according to any one of claims 1 to 4, which is disposed on a back face of the liquid crystal display panel.
